## Europäisches Patentamt
## European Patent Office
## Office européen des brevets

(11) Veröffentlichungsnummer: **0 367 052**
**A2**

# EUROPÄISCHE PATENTANMELDUNG

(21) Anmeldenummer: 89119550.5

(22) Anmeldetag: 21.10.89

(51) Int. Cl.⁵: **C08L 67/02** , //(C08L67/02, 51:00)

(30) Priorität: 31.10.88 DE 3837037

(43) Veröffentlichungstag der Anmeldung:
09.05.90 Patentblatt 90/19

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Mc Kee, Graham Edmund, Dr.**
**Kastanienweg 8**
**D-6940 Weinheim(DE)**
Erfinder: **Ittemann, Peter, Dr.**
**217 Manor House Mill**
**Fort Mill, S.C. 29715(US)**
Erfinder: **Knoll, Manfred**
**Pfrimmstrasse 1**
**D-6521 Wachenheim(DE)**
Erfinder: **Kleber, Friedrich**
**Hermann-Hesse-Strasse 5**
**D-6520 Worms 25(DE)**
Erfinder: **Heinz, Gerhard, Dr.**
**Im Vogelsang 2**
**D-6719 Weisenheim(DE)**

(54) **Kautschukmodifizierte Formmassen.**

(57) Die vorliegende Erfindung betrifft kautschukmodifizierte Formmassen, enthaltend

A) 65 bis 97 Gew.% eines thermoplastischen Polyesters und

B) 3 bis 35 Gew.% eines Gemisches zweier Pfropfkautschuke aus

B1) 75 bis 95 Gew.%, bezogen auf die Komponente B), eines mit mindestens einem Vinylmonomeren aus der Reihe Styrol, Acrylnitril oder Methylmethacrylat gepfropftem Dienkautschuks und

B2) 5 bis 25 Gew.%, bezogen auf die Komponente B), eines mit mindestens einem Vinylmonomeren aus der Reihe Styrol, Acrylnitril oder Methylmethacrylat gepfropftem Acrylatkautschukes wobei sich die Mengenangaben aus A) und B) auf 100 Gew.% ergänzen sowie ein Verfahren zu deren Herstellung und die Verwendung dieser Formmassen.

EP 0 367 052 A2

## Kautschukmodifizierte Formmassen

Die vorliegende Erfindung betrifft kautschukmodifizierte Formmassen aus einem thermoplastischen Polyester, der mit einem gepfropften Dienkautschuk und einem gepfropften Acrylatkautschuk modifiziert ist, sowie ein Verfahren zu deren Herstellung und die Verwendung dieser Formmassen.

Thermoplastische Polyester, vor allem Polyethylenterephthalat, Polybutylenterephthalat und einige Copolyester haben wegen ihrer herausragenden technologischen Eigenschaften wie Steifigkeit, Härte, Abriebfestigkeit, dynamische und thermische Belastbarkeit, sowie wegen ihrer schnellen Verarbeitbarkeit zunehmend technische Bedeutung erlangt. Ein Nachteil dieser Polyester ist ihre unbefriedigende Zähigkeit.

Um die Zähigkeit zu verbessern, wurden in der DE-PS 2 444 584 und der DE-OS 27 26 256 als Schlagzähkomponente gepfropfte Acrylatkautschuke und in der DE-PS 2 348 377 gepfropfte Dienkautschuke vorgeschlagen.

In der EP-A-131 202 wurden Pfropfprodukte aus Dienkautschuk und/oder Alkylacrylatkautschuk mit bimodaler Verteilung der Kautschukteilchendurchmesser als Modifizierungsmittel beschrieben.

Diese modifizierten Formmassen weisen zwar im allgemeinen eine verbesserte Zähigkeit auf. Diese Verbesserung reicht aber für spezielle Anwendungsbereiche, wo die Zähigkeit bis -40°C und in Extremfällen bis zu -60°C noch ausreichen soll, nicht aus.

Aufgabe der vorliegenden Erfindung war es, thermoplastische Formmassen zur Verfügung zu stellen, die auch bis zu sehr tiefen Temperaturen eine gute Zähigkeit aufweisen, bei gleichzeitig guter Witterungsbeständigkeit und guter Farbstabilität der Masse.

Gelöst wurde die Aufgabe durch Modifizierung der thermoplastischen Polyester mit einer Mischung aus gepfropftem Dien- und Acrylatkautschuk mit einem engen Mischungsverhältnis.

Gegenstand der vorliegenden Erfindung sind kautschukmodifizierte Formmassen, enthaltend

A) 65 bis 97 Gew.% eines thermoplastischen Polyesters und

B) 3 bis 35 Gew.% eines Gemisches zweier Pfropfkautschuke aus

B1) 75 bis 95 Gew.% bezogen auf die Komponente B), eines mit mindestens einem Vinylmonomeren aus der Reihe Styrol, Acrylnitril oder Methylmethacrylat gepfropftem Dienkautschuks und

B2) 5 bis 25 Gew.% bezogen auf die Komponente B), eines mit mindestens einem Vinylmonomeren aus der Reihe Styrol, Acrylnitril oder Methylmethacrylat gepfropftem Acrylatkautschuks wobei sich die Mengenangaben aus A) und B) auf 100 Gew.% ergänzen.

Zu den Aufbaukomponenten ist folgendes auszuführen:

Geeignete thermoplastische Polyester A) sind bekannt und in der EP 131 202 beschrieben. Bevorzugte Polyester sind Polyethylenterephthalat und Polybutylenterephthalat oder Mischungen dieser Polyester. Es können aber auch bis zu 70 Gew.%, bevorzugt bis zu 50 Gew.%, aromatische Polycarbonate mitverwendet werden. Unter diesen aromatischen Polycarbonaten sind Homopolycarbonate, Copolycarbonate und Mischungen dieser Polycarbonate zu verstehen.

Die thermoplastischen Polyester A) werden in der Formmasse in Mengen von 65 bis 97 Gew.%, bevorzugt 75 bis 85 Gew.% verwendet.

Die Pfropfkautschuke B) umfassen Pfropfpolymerisate mit kautschukelastischen Eigenschaften, die durch Aufpfropfen von Vinylmonomeren aus der Reihe Styrol, Acrylnitril, Methylmethacrylat auf teilchenförmige Dienkautschuke und Acrylatkautschuke erhalten werden. Bevorzugte Pfropfmonomere sind Styrol, Acrylnitril und Methylmethacrylat sowie deren Gemische. Sie können mit bis zu 50 Gew.% Comonomeren verwendet werden, die reaktive Gruppen wie Epoxid-, Hydroxyl-, Carboxyl- und Aminogruppen aufweisen. Monomere die diese Gruppen aufweisen, sind beispielsweise Glycidylmethacrylat, Hydroxyethylacrylat, (Meth)acrylsäure, t-Butylaminoethyl(meth)acrylat, Diethylaminoethylacrylat oder N-Hydroxymethyl(meth)-acrylamid.

Die Herstellung der Dienkautschuk-Pfropfgrundlage und der Pfropfpolymerisate ist bekannt und wird z.B. in "Methoden der organischen Chemie" Houben-Weyl, Band 14/1, Georg-Thieme-Verlag, Stuttgart 1961, Seite 393 bis 406, sowie in Ullmanns Enzyklopädie der technischen Chemie, 4. Auflage, Band 19, Verlag Chemie 1981, Seite 279 bis 284 beschrieben.

Bevorzugte Diene sind Butadien und Isopren. Sie können mit bis zu 50 Gew.% Comonomeren polymerisiert werden.

Die gepfropften Acrylatkautschuke sind bekannt und beispielsweise in der EP-A 131 202 beschrieben. Bevorzugte Acrylate sind n-Butylacrylat und Ethylhexylacrylat.

Die Acrylatkautschuke haben Glastemperaturen unter -20°C, bevorzugt unter -30°C.

Die Teilchengröße $d_{50}$ (mittlerer Teilchendurchmesser) der gepfropften Dienkautschuke und Acrylatkautschuke liegen zwischen 0,05 und 1 $\mu$m, bevorzugt 0,1 bis 0,5 $\mu$m.

2

Die Komponente B) enthält 75 bis 95 Gew.%, bevorzugt 78 bis 90 Gew.% Komponente B1) und 5 bis 25 Gew.%, bevorzugt 10 bis 22 Gew.% Komponente B2). Die Komponente B) wird in der Formmasse in Mengen von 3 bis 35 Gew.%, bevorzugt 15 bis 25 Gew.% verwendet.

Die Herstellung der Formmassen kann in den üblichen Mischaggregaten, wie Walzen, Knetern, Ein- und Mehrwellenextrudern, erfolgen. Dabei kann die Komponente B) als Feststoffgemisch der Komponenten B1) und B2) mit der Komponente A) aufgeschmolzen und homogenisiert werden oder die Komponente B) kann in die Schmelze des thermoplastischen Polyesters A) eingearbeitet werden.

Ein bevorzugtes Verfahren ist aber die Einarbeitung der in Form einer wäßrigen Dispersion vorliegenden Komponenten B1) und B2). Dies geschieht vorteilhaft in einem Extruder mit einer Entgasungsvorrichtung. Der Polyester wird bei Temperaturen von 200 bis 350 °C im Extruder aufgeschmolzen. In diese Schmelze wird ein Gemisch der wäßrigen Dispersionen der Komponenten B1) und B2) eingetragen, das dampfförmig entweichende Wasser über die Entgasungsvorrichtung abgezogen, die Schmelze extrudiert und granuliert. Bei einer anderen Verfahrensvariante können die Dispersionen der Komponenten B1) und B2) getrennt in die Schmelze des thermoplastischen Polyesters A) eingetragen werden.

Die erfindungsgemäßen Formmassen können übliche Additive, wie Gleit- und Entformungsmittel, Nukleierungsmittel, Stabilisatoren, Füll- und Verstärkungsstoffe, Flammschutzmittel sowie Farbpigmente und/oder Farbstoffe enthalten.

Die gefüllten bzw. verstärkten Formmassen können bis zu 60 Gew.%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.%, bezogen auf die flammgeschützten Formmassen.

Der Einsatzbereich der erfindungsgemäßen Formmassen liegt vor allem im Kfz-Bereich als beispielsweise Stoßfänger, Spoiler und Karosserieteile.

Beispiele

Herstellung Kautschuk B1)

In einem Reaktionsgefäß wurden 464,28 kg VE (vollentsalztes)-Wasser, 3,43 kg Kaliumstearat, 2,92 kg t-Dodecylmercaptan, 0,59 kg Natriumbicarbonat und 0,86 kg Kaliumpersulfat vorgelegt, zweimal mit Stickstoff gespült, evakuiert, auf 65 °C geheizt und unter Rührung mit einem Sechstel von Zulauf 1 beschickt.

Zulauf 1:

424,19 kg Butadien

Bei gleichbleibender Temperatur erfolgte die Zugabe vom Rest des Zulaufs 1 in 5 Stunden. 10 Stunden nach Beginn des Zulaufs 1 wurden 2,92 kg t-Dodecylmercaptan zugegeben und bis 15 Stunden weitergerührt. Danach wurden 4,28 kg Kaliumstearat und 104,06 kg VE-Wasser und 44,63 kg einer Ethylacrylat-Methacrylamid-Copolymer (Gew.-Verhältnis 96:4)-Dispersion (Feststoffgehalt = 40 Gew.%) zugegeben. Dies bewirkte eine Agglomeration der kleinen Polybutadienteilchen ($d_{50}$-Wert der Massenverteilung von 0,1 auf 0,3 μm). Nach Aufheizen auf 80 °C wurde Zulauf 2 auf einmal und Zulauf 3 in 4 Stunden zudosiert.

Zulauf 2:

0,22 kg Kaliumpersulfat und 23,33 kg VE-Wasser

Zulauf 3:

82,73 kg Styrol und 27,57 kg Acrylnitril

Anschließend wurde weitere 2 Stunden polymerisiert.

Herstellung Kautschukdispersion B2)

Durch Emulsionspolymerisation in 589,59 Gew.-Teilen Wasser unter Verwendung von 2,78 Gew.-Teilen einer $C_{12}$-$C_{18}$-Paraffinsulfonsäure als Emulgator und 1,64 Gew.-Teilen Kaliumpersulfat als Katalysator und 0,95 Gew.-Teilen Natriumbicarbonat als pH-Regulator wurden bei 62°C 286,68 Gew.-Teile n-Butylacrylat und 5,85 Gew.-Teile Dihydroxydicyclopentadienacrylat polymerisiert. Nach 6,5 Stunden wurden 89,56 Gew.-Teile Styrol und 38,38 Gew.-Teile Acrylnitril zu dem Reaktionsgemisch in 3,5 Stunden gegeben und dann weitere 1,5 Stunden bei einer Temperatur von 62°C polymerisiert.

Die Dispersion hatte einen $d_{50}$-Wert der Massenverteilung von 0,35 $\mu$m.

Beispiele 1 bis 4

Die Dispersionen B1) und B2) wurden in den in der Tabelle angegebenen vier verschiedenen Verhältnissen gemischt (Beispiele 1 bis 4) und in einer Polymerschmelze aus Polybutylenterephthalat mit einer Viskositätszahl von 129 ml/g, gemessen als eine 0,5 %ige Lösung aus Phenol und ortho-Dichlorbenzol (1:1) bei 25°C, in einem ZSK 53-Extruder der Firma Werner & Pfleiderer eingepumpt. Die gesamte Menge an festem Kautschuk in der Abmischung betrug 22 Gew.%. Das Wasser wurde über eine Entgasungsschnecke entfernt, die Schmelze weiter gemischt und als Strang extrudiert und granuliert.

Die mechanischen und Zähigkeits-Werte sind in der Tabelle aufgeführt.

Vergleichsbeispiele 1 und 2

Als Vergleichsbeispiele dienen Abmischungen mit der Dispersion B2 allein (Vergleichsbeispiel 1) sowie eine Mischung aus den Dispersionen B1 und B2 im Verhältnis 1:1 (Vergleichsbeispiel 2).

Tabelle

| Beispiel Nr. | Gew.% Kautschuk | | Kerbschlagzähigkeit | | | | Durchstoßversuch | | | | Farbe | E-Modul N/mm² DIN 53 457 |
|---|---|---|---|---|---|---|---|---|---|---|---|---|
| | B1 | B2 | 23 | -20 | -40 | -60°C | 23 | -20 | -40 | -60°C | | |
| | | | DIN 53 453-K | | | | DIN 53 443 Ws/Wges* | | | | | |
| 1 | 75 | 25 | 32 | 13 | 9 | 8 | 48/55 | 59/72 | 68/82 | 59/71 | hellere Farbe | 1460 |
| 2 | 85 | 15 | 31 | 15 | 10 | 9 | 47/54 | 58/70 | 66/79 | 65/78 | hellere Farbe | 1432 |
| 3 | 90 | 10 | 32 | 18 | 7 | 8 | 47/54 | 57/71 | 66/79 | 61/72 | hellere Farbe | 1420 |
| 4 | 95 | 5 | 32 | 28 | 12 | 11 | 45/52 | 57/69 | 67/79 | 44/53 | hellere Farbe | 1364 |
| Vgl.beispiele | | | | | | | | | | | | |
| 1 | - | 100 | 40 | 7 | 2 | 1 | 55/62 | 55/67 | 47/56 | 19/22 | cremfarbe | 1656 |
| 2 | 50 | 50 | 32 | 9 | 5 | 3 | 45/52 | 57/72 | 66/80 | 39/50 | cremfarbe | 1543 |

* Ws = Schädigungsarbeit an 2 mm dicken Rundscheiben
Wgs = Gesamtarbeit an 2 mm dicken Rundscheiben

Mit steigendem Dienkautschukanteil B1) wird die Kälteschlagzähigkeit besser bei leicht fallendem E-Modul. Überraschenderweise wird ein großer Sprung in der Kerbschlagzähigkeit bei -20, -40 und 60°C registriert mit ≧ 75 Gew.% B1, bezogen auf B1 und B2. Überraschenderweise wird auch die Farbe heller wobei wegen des thermisch labileren Butadiens das Gegenteil zu erwarten gewesen wäre.

**Ansprüche**

1. Kautschukmodifizierte Formmassen, enthaltend

A) 65 bis 97 Gew.% eines thermoplastischen Polyesters, gegebenenfalls im Gemisch mit einem aromatischen Polycarbonat, und

B) 3 bis 35 Gew.% eines Gemisches zweier Pfropfkautschuke aus

B1) 75 bis 95 Gew.%, bezogen auf die Komponente B), eines mit mindestens einem Vinylmonomeren aus der Reihe Styrol, Acrylnitril oder Methylmethacrylat gepfropftem Dienkautschuks und

B2) 5 bis 25 Gew.%, bezogen auf die Komponente B), eines mit mindestens einem Vinylmonomeren aus der Reihe Styrol, Acrylnitril oder Methylmethacrylat gepfropftem Acrylatkautschukes

wobei sich die Mengenangaben aus A) und B) und aus B1) und B2) jeweils auf 100 Gew.% ergänzen.

2. Formmassen nach Anspruch 1, enthaltend Polybutylenterephthalat und/oder Polyethylenterephthalat als Komponente A).

3. Formmassen nach einem der Ansprüche 1 oder 2, enthaltend bis zu 70 Gew.% eines aromatischen Polycarbonats als Komponente A).

4. Formmassen nach einem der Ansprüche 1 bis 3, enthaltend eine Komponente B1), zu deren Aufbau ein Dienkautschuk verwendet wurde, der aus Butadien mit bis zu 50 Gew.% Comonomeren aufgebaut ist.

5. Formmassen nach einem der Ansprüche 1 bis 4, enthaltend eine Komponente B2), zu deren Herstellung ein Acrylatkautschuk verwendet wurde, der im wesentlichen aus n-Butylacrylat und/oder Ethylhexylacrylat aufgebaut ist.

6. Formmassen nach einem der Ansprüche 1 bis 5, enthaltend mindestens einen Pfropfkautschuk B1) oder B2), dessen Pfropfhülle unter Verwendung von bis zu 50 Gew.% Comonomeren mit Epoxid-, Hydroxyl-, Carboxyl- und/oder Aminogruppen hergestellt wurde.

7. Formmassen nach einem der Ansprüche 1 bis 6, enthaltend die Komponenten B1) und B2) mit Teilchengrößen von 0,05 bis 1 μm.

8. Formmassen nach einem der Ansprüche 1 bis 7, enthaltend übliche 60 Gew.% Füll- und/oder Verstärkungsstoffe.

9. Verfahren zur Herstellung kautschukmodifizierter Formmassen gemäß einem der Ansprüche 1 bis 8, dadurch gekennzeichnet, daß man den thermoplastischen Polyester in einen Extruder bei Temperaturen von 200 bis 350 aufschmilzt und die Komponenten B1) und B2) als wäßrige Dispersionen einzeln oder im Gemisch in die Schmelze einträgt, das verdampfende Wasser über eine Entgasungsvorrichtung aus der Schmelze abzieht, die Schmelze extrudiert und anschließend granuliert.

10. Verwendung der kautschukmodifizierten Formmasse gemäß einem der Ansprüche 1 bis 8 zur Herstellung von Formteilen für den Automobilsektor.

5